(19) Europäisches Patentamt
European Patent Office
Office européen des brevets

(11) **EP 1 868 289 A1**

(12) **EUROPEAN PATENT APPLICATION**

(43) Date of publication:
**19.12.2007 Bulletin 2007/51**

(51) Int Cl.:
*H02P 23/00* (2006.01)    *G04D 7/12* (2006.01)
*F16F 15/02* (2006.01)

(21) Application number: **07011567.0**

(22) Date of filing: **13.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **15.06.2006 JP 2006165979**

(71) Applicant: **Fanuc Ltd
Minamitsuru-gun,
Yamanashi 401-0597 (JP)**

(72) Inventors:
• **Iwashita, Yasusuke
Fujiyoshida-shi
Yamanashi 403-0003 (JP)**

• **Okita, Tadashi
Fujiyoshida-shi
Yamanashi 403-0005 (JP)**
• **Kawamura, Hiroyuki
Yamanashi 401-0301 (JP)**
• **Ma, Changbin
Davis
CA 95616 (US)**

(74) Representative: **Thum, Bernhard
Wuesthoff & Wuesthoff
Patent- und Rechtsanwälte
Schweigerstrasse 2
81541 München (DE)**

(54) **Motor control device**

(57)    A motor control device detects acceleration of an object driven by a motor through a transmission mechanism, determines a correction command based on the detected acceleration of the driven object, corrects an operation command for the motor by the correction command thus determined, and then controls the motor operation based on the corrected operation command. In the process, a phase shifter combines an operation command signal indicating the operation command with a correction command signal indicating the correction command after adjustably changing the phase of the correction command signal with respect to the vibration of the driven object generated due to the natural vibration of the transmission mechanism.

EP 1 868 289 A1

## Description

BACKGROUND OF THE INVENTION

1. Field of the Invention

The present invention relates to a motor control device for controlling a motor to reduce vibration generated in an object driven by the motor through a transmission mechanism.

2. Description of the Related Art

In a system for driving an object by a motor through a transmission mechanism, such as a ball screw mechanism, undesirable vibration may be generated in the driven object due to the natural vibration of the transmission mechanism. Vibration of the driven object due to the natural vibration of the transmission mechanism destabilizes the operation of the driven object, and therefore is not desirable for the purpose of control.

In order to reduce the vibration of the driven object due to the natural vibration of the transmission mechanism, as described in, for example, Japanese Unexamined Patent Publication No. 6-91482, there is generally employed a method, in which an acceleration sensor is attached to the driven object, the acceleration (acceleration feedback) of the driven object detected by the acceleration sensor is multiplied by the gain thereby to determine a correction command, which is added to or subtracted from a motor operation command determined based on the desired operation of the driven object thereby to correct the operation command, and the motor is controlled based on the operation command thus corrected.

In this system for driving a driven object with a motor through a transmission mechanism, the operation of the motor, i.e. the drive force, based on the operation command, is transmitted to the driven object through the transmission mechanism. Therefore, a time delay occurs from when the time the motor receives the operation command to when the operation corresponding to the particular operation command is reflected in the driven object. However, in the conventional system, the correction command is added to or subtracted from the operation command as it is without taking into consideration time delay due to the presence of the transmission mechanism. Therefore, even if the motor is controlled based on an operation command signal corrected by combining a correction command signal indicating the correction command and an operation command signal indicating the operation command, the vibration of the driven object due to the natural vibration of the transmission mechanism cannot always be sufficiently reduced.

SUMMARY OF THE INVENTION

Accordingly, it is an object of the present invention to solve the aforementioned problem of the prior art and to provide a motor control device capable of positively reducing the vibration generated by an object driven by a motor through a transmission mechanism.

In order to achieve the aforementioned object, according to the present invention, there is provided a motor control device for detecting acceleration of an object driven by a motor through a transmission mechanism, determining a correction command based on the detected acceleration of the driven object, correcting an operation command for the motor by the correction command thus determined, and then controlling the operation of the motor based on the corrected operation command thereby to reduce vibration generated in the driven object, the motor control device including a phase shifter for combining an operation command signal indicating the operation command with a correction command signal indicating the correction command after adjustably changing the phase of the correction command signal with respect to the vibration of the driven object generated due to the natural vibration of the transmission mechanism.

In this phase shifter, the phase of the correction command signal is preferably adjusted so as to offset the vibration of the driven object generated due to the natural vibration of the transmission mechanism by the vibration transmitted from the motor to the driven object through the transmission mechanism based on the correction command signal. More preferably, in the phase shifter, the phase of the correction command signal is adjusted such that the phase shift is 180 degrees between the vibration of the driven object generated due to the natural vibration of the transmission mechanism and the vibration transmitted from the motor to the driven object through the transmission mechanism based on the correction command signal.

The phase shifter may change the timing of adding the correction command signal to the operation command signal thereby to change the phase of the correction command signal with respect to the vibration of the driven object generated due to the natural vibration of the transmission mechanism. For example, the phase shifter can be a buffer storage unit capable of holding the correction command signal for a preset time.

Also, the phase shifter may change the phase of an output signal with respect to an input signal thereby to change the phase of the correction command signal with respect to the vibration of the driven object generated due to the natural vibration of the transmission mechanism. For example, the phase shifter can be a PID filter, a low-pass filter or a high-pass filter.

The phase shifter can be selected from a buffer storage unit, a PID filter, a low-pass filter, a high-pass filter or any combination thereof.

Also, the phase shifter may be a predictor for predicting a correction command signal after the lapse of a predetermined time based on the past correction command signal.

The motor control device according to the present invention includes a phase shifter capable of adjustably changing the phase of the correction command signal with respect to the vibration of the driven object generated due to the natural vibration of the transmission mechanism. Therefore, in spite of the time required to generate the correction command signal on the basis of the acceleration of the driven object or the delay time caused in the transmission of the vibration from the motor to the driven object through the transmission mechanism, the phase of the correction command signal can be adjusted with respect to the vibration of the driven object generated due to the natural vibration of the transmission mechanism such that the phase shift generated by the delay time between the vibration of the driven object caused by the motor based on the correction command signal (the correction command signal component of the operation command signal after combination) and the vibration of the driven object generated due to the natural vibration of the transmission mechanism is obviated, thereby positively reducing the vibration of the driven object generated due to the natural vibration of the transmission mechanism.

BRIEF DESCRIPTION OF THE DRAWINGS

The above and other objects, features and advantages of the present invention will be described in more detail below based on the preferred embodiments of the present invention with reference to the accompanying drawings, in which:

Fig. 1 is a diagram showing a general configuration of a drive system using a motor control device according to the present invention;
Fig. 2 is a function block diagram of a motor control device according to a first embodiment of the present invention;
Fig. 3 is a function block diagram showing an example of the configuration of a speed control processing unit of the motor control device shown in Fig. 2;
Fig. 4 is a function block diagram showing an example of the configuration of a correction command generating unit of the motor control device shown in Fig. 2;
Figs. 5A to 5C are diagrams for explaining the principle of the present invention;
Fig. 6 is a function block diagram of a motor control device according to a second embodiment of the present invention;
Figs. 7A to 7C are function block diagrams showing a first embodiment of a phase shifter of the motor control device according to the present invention;
Figs. 8A to 8C are function block diagrams showing a second embodiment of a phase shifter of the motor control device according to the present invention;
Figs. 9A to 9C are function block diagrams showing a third embodiment of a phase shifter of the motor control device according to the present invention;
Figs. 10A and 10B are a function block diagram showing a fourth embodiment of a phase shifter of the motor control device according to the present invention and a diagram for explaining the prediction method, respectively; and
Fig. 11 is a function block diagram showing a fifth embodiment of a phase shifter of the motor control device according to the present invention.

DETAILED DESCRIPTION OF THE INVENTION

A preferred embodiment of the present invention will be described below with reference to the accompanying drawings.

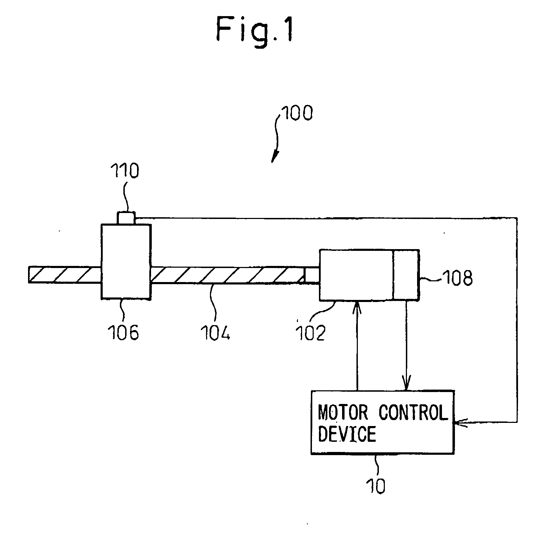

First, with reference to Fig. 1, the general configuration of a drive system 100 using a control device 10 according to the present invention will be described. Such a drive system 100 can be used in various fields such as to drive a table of a machine tool. The drive system 100 includes a motor 102, a driven object 106, such as a table driven by the motor 102 through a transmission mechanism 104, a speed detector 108 for detecting a speed of the driven object 106, and an acceleration detector 110 attached to the driven object for detecting an acceleration of the driven object. The operation of the drive system 100 is controlled by the motor control device 10 based on the speed of the driven object 106 detected by the speed detector 108 and the acceleration of the driven object 106 detected by the acceleration detector 110. A servo motor, for example, can be used as the motor 102. Also, a ball screw mechanism, for example, can be used as the transmission mechanism.

The speed of the driven object 106 and the rotational speed of the motor 102 for driving the driven object 106 are proportional to each other, and therefore, as shown in Fig. 1, an encoder attached to the motor 102 or the like is generally used as the speed detector 108 to detect the rotational speed of the motor 102 in place of the speed of the driven object 106. However, the speed detector may be attached to the driven object 106 to detect the speed of the driven object 106, or the position detector may be attached to the driven object 106 to detect the speed of the driven object 106 by differentiating the output of the position detector.

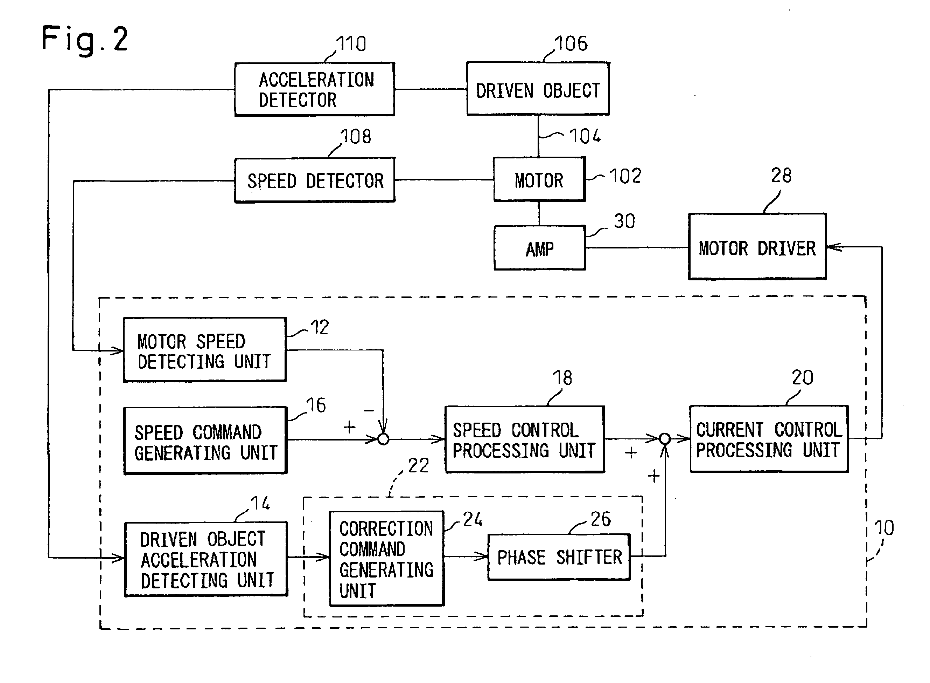

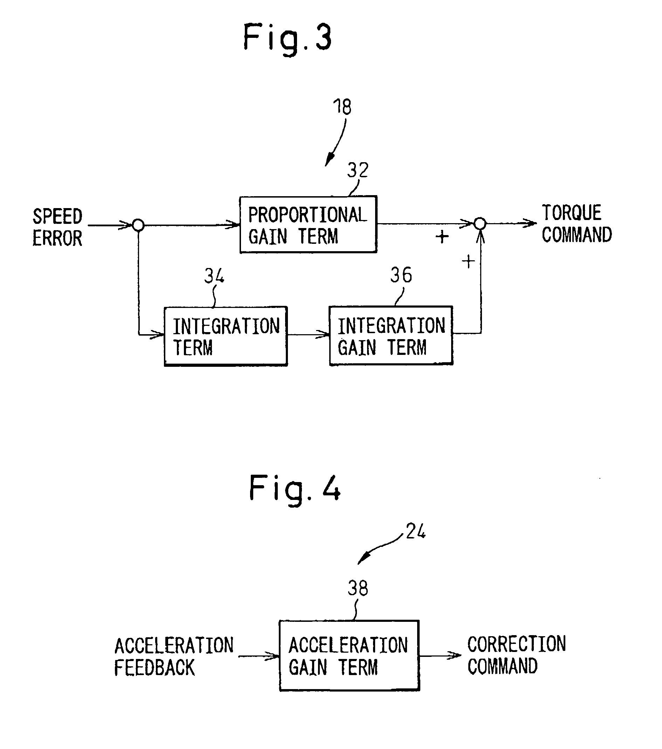

Next, with reference to Figs. 2 to 4, the general configuration of the motor control device 10 according to a first embodiment of the present invention will be described. Fig. 2 is a function block diagram showing the motor control device according to the first embodiment of the present invention, Fig. 3 is a function block diagram showing an example of the configuration of a speed control processing unit of the motor control device shown in Fig. 2, and Fig. 4 is a function block diagram showing an example of the configuration of a correction command generating unit of the motor control device shown in Fig. 2.

The motor control device 10 controls the motor 102 such that the driven object 106 moves at the desired speed. Here, as shown in Fig. 1, a case will be described below in which the rotational speed of the motor 102 correlated with the speed of the driven object 106 is detected in place of the speed of the driven object 106 and the motor 102 is controlled by feedback based on the detected rotational speed of the motor 102. The motor control device 10 obtains, through a motor speed detecting unit 12, the speed of the motor 102 detected by the speed detector 108 and obtains, through a driven object acceleration detecting unit 14, the acceleration of the driven object 106 detected by the acceleration detector 110.

The motor control device 10 further includes a speed command generating unit 16, a speed control processing unit 18, a current control processing unit 20, and an operation command correction processing unit 22.

The speed command generating unit 16 generates a speed command Vc for the motor 102 in accordance with the speed of the driven object 106 designated by a program or the like. The speed command Vc designates the rotational speed of the motor 102 corresponding to the moving speed of the driven object 106 designated by the program or the like.

The speed control processing unit 18 is an unit for controlling the speed by feedback, wherein the difference between the speed command Vc generated by the speed command generating unit 16 and the rotational speed (speed feedback) Vfb of the motor 102 detected by the speed detector 108 and fed back through the motor speed detecting unit 12, i.e. a speed error Verr is calculated, and a torque command Tc is generated, as an operation command, from the speed error Verr thus calculated, based on a following equation (1).

$$Tc = Kpv \times Verr + Kiv \int_0^t Verrdt \qquad (1)$$

where t is time, Kpv is a proportional controller coefficient for torque command generation, and Kiv is an integrator coefficient for torque command generation, which are constants predetermined by experiments or the like.

The speed control processing unit 18, as shown in Fig. 3, for example, may be configured of a proportional gain term 32 for amplifying the speed error Verr, an integration term 34 for integrating the speed error Verr and an integration gain term 36 for amplifying the output from the integration term 34.

The operation command correction processing unit 22 is provided to reduce the vibration of the driven object 106 generated due to the natural vibration of the transmission mechanism 104, and realize the behavior stabilization, and the highly accurate speed control of the driven object 106. The operation command correction processing unit 22 includes a correction command generating unit 24 for generating a correction command to correct the torque command Tc generated as an operation command by the speed control processing unit 18. The correction command generating unit 24, as shown in Fig. 4, is configured of an acceleration gain term 38, and generates a torque correction command Tp, as a correction command, from the acceleration (acceleration feedback) Afb of the driven object 106 detected by the acceleration detector 110 and obtained through the driven object acceleration detecting unit 14, based on a following equation (2).

$$Tp = Ks \times Afb \qquad (2)$$

The operation command correction processing unit 22 corrects the operation command signal by combining the torque correction command signal configured of a set of the torque correction commands (correction commands) Tp determined as described above with the operation command signal configured of a set of the torque commands (operation commands) Tc output from the speed control processing unit 18.

The period of the acceleration of the driven object 106 detected by the acceleration detector 110 coincides with the period of vibration generated in the driven object 106. Therefore, the period of vibration of the torque correction command signal configured of the torque correction commands determined by multiplying the detected acceleration of the driven object 106 by the acceleration gain Ks substantially coincides with the vibration period of the driven object 106. Therefore, in order to offset vibration generated in the driven object 106 due to the natural vibration of the transmission mechanism 104 by vibration caused in the driven object 106 by the torque correction command signal component of the operation command signal corrected by the torque correction command signal, the phase shift of 180 degrees is required to be secured between the vibration caused in the driven object 106 by the torque correction command signal component and the vibration of the driven object 106 generated due to the natural vibration of the transmission mechanism 104.

On the other hand, in order to reflect the vibration caused by the torque correction command signal component in the behavior of the driven object 106, the vibration caused by the torque correction command signal component is required to be transmitted from the motor 102 to the driven object 106 through the transmission mechanism 104. This involves a delay time. Some delay in time also exists before the torque correction command is generated from the acceleration of the driven object 106. Therefore, unless the phase of the torque correction command signal with respect to the vibration of the driven object 106 is adjusted in accordance with the delay time, the vibration of the driven object 106 generated due to the natural vibration of the transmission mechanism 104 cannot be positively offset by the vibration caused in the driven object by the torque correction command signal component.

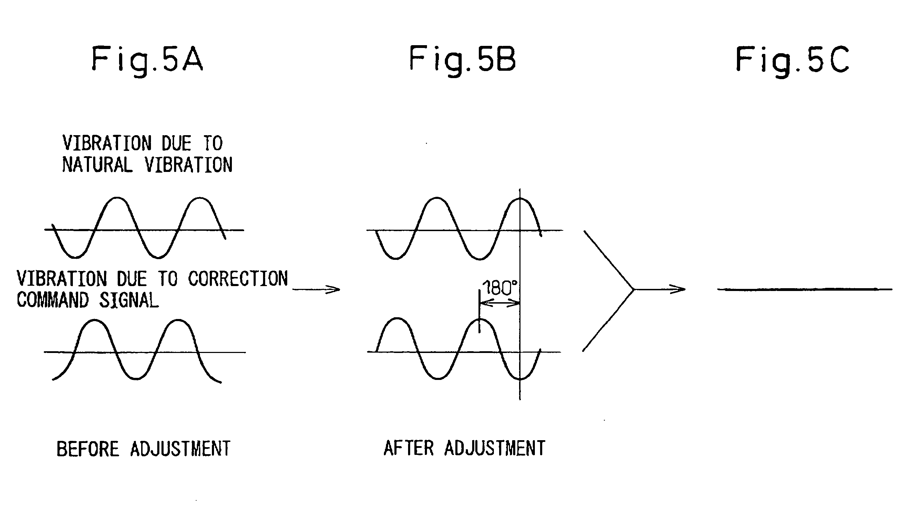

In view of this, the motor control device 10 according to the present invention further includes a phase shifter 26 for adjustably changing the phase of the torque correction command signal with respect to the vibration of the driven object 106 generated due to the natural vibration of the transmission mechanism 104. In the phase shifter 26, as shown in Figs. 5A to 5C, the phase of the torque correction command signal with respect to the vibration of the driven object 106 generated due to the natural vibration of the transmission mechanism 104 is adjusted so as to secure the phase shift of 180 degrees between the vibration of the driven object 106 caused by the torque correction command signal component and the vibration of the driven object 106 generated due to the natural vibration of the transmission mechanism 104, and then the torque correction command signal is combined with the torque command signal (operation command signal) thereby correcting the torque command signal. The correction of the torque command signal (operation command signal) by the torque correction command signal, i.e. the combination of the torque correction command signal with the torque command signal (operation command signal) is performed by adding the value of each torque correction command in the torque correction command signal to the value of each torque command (operation command) in the torque command signal (operation command signal).

The current control processing unit 20 determines a current command Cc from the correction torque command Tc' obtained as a correction operation command by adding the torque correction command Tp to the torque command Tc generated by the speed control processing unit 18, based on an following equation (3).

$$Cc = Kt \times Tc' \qquad (3)$$

where Kt is a torque constant of the motor 102.

The speed command generating unit 16, the speed control processing unit 18, the current control processing unit 20 and the operation command correction processing unit 22 are each constituted by a processor, a program stored in a memory such as ROM or RAM and a circuit etc., capable of carrying out the respective functions.

The current command Cc determined in this way by the motor control device 10 according to the present invention is sent to the motor driver 28. The motor driver 28, based on the current command Cc, supplies a predetermined level of current to the motor 102 through an amplifier 30 thereby to drive the motor 102. As a result, the driven object 106 is driven by the motor 102 through the transmission mechanism 104.

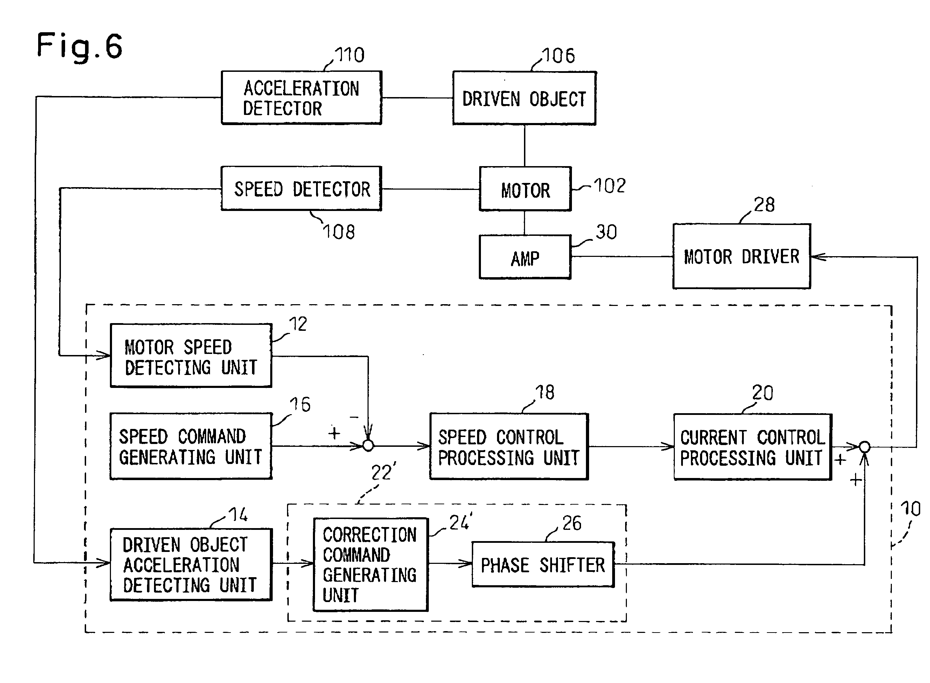

In this embodiment, the torque command Tc generated by the speed control processing unit 18 is corrected by the operation command correction processing unit 22. However, as shown in Fig. 6, the current command Cc generated as an operation command by the current control processing unit 20 may be corrected by the operation command correction processing unit 22'. In the motor control device 10 according to a second embodiment of the present invention shown in Fig. 6, the same parts as those of the first embodiment are designated by the same reference numerals, respectively.

The current control processing unit 20 of the second embodiment, though configured in the same way as the current control processing unit 20 shown in Fig. 1, is different from the first embodiment in that it receives the torque command Tc generated by the speed control processing unit 18 as it is without correction. Also, the correction command generating unit 24' of the second embodiment, though similar to the correction command generating unit 24 in that both are configured of an acceleration gain term, is different from the latter in that it generates the current correction command Cp as a correction command from the acceleration (acceleration feedback) Afb of the driven unit 106.

On the other hand, the phase shifter 26 has the same configuration as the corresponding phase shifter of the first embodiment. The phrase shifter 26 adjustably changes the phase of the current correction command signal generated by the current control processing unit 20 with respect to the vibration of the driven object 106 generated due to the natural vibration of the transmission mechanism 104 so as to secure the phase shift of 180 degrees between the vibration of the driven object 106 caused by the current correction command signal component and the vibration of the driven object 106 generated due to the natural vibration of the transmission mechanism 104, and then combines the current correction command signal with the current operation command signal (operation command signal) thereby to correct the current command signal. The current correction command signal and the current command signal (operation command signal) are combined with each other by adding the value of each of current correction commands in the current correction command signal to the value of each of current commands (operation commands) in the current command signal (operation command signal).

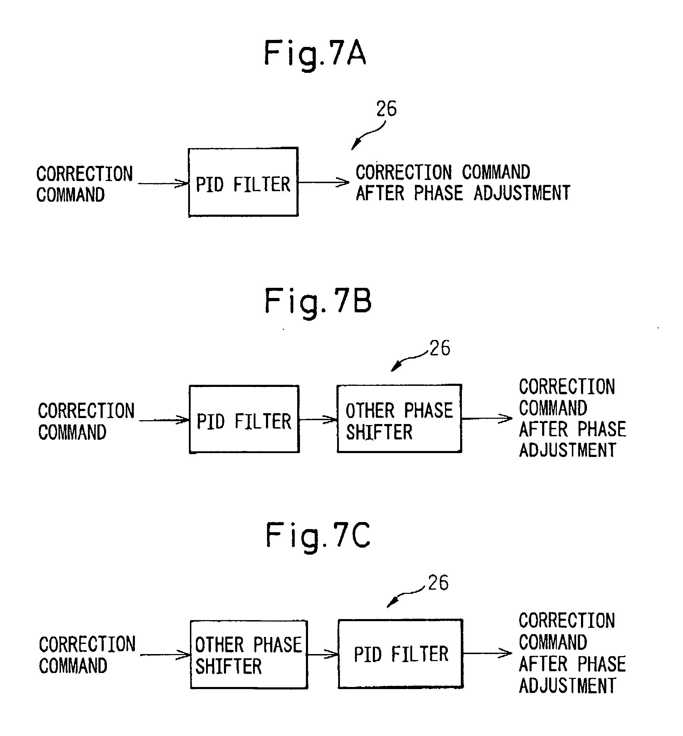

Next, several embodiments of the phase shifter 26 will be described below with reference to Figs. 7A to Fig. 11.

Figs. 7A to 7C are function block diagrams showing a first embodiment of he phase shifter 26. The phase shifter 26 according to this embodiment includes a PID filter functioning as a delay element for delaying the phase. The phase shifter 26 according to this embodiment, as shown in Fig. 7A, may be configured of only a PID filter, or as shown in Fig. 7B or 7C, may be configured of a combination of a PID filter and a phase shifter of another type, such as a buffer storage unit or a low-pass filter, described later, arranged before or after the PID filter. The PID filter is represented, for example, by a following equation (4).

$$y(t) = Kpx(t) + Ki\int_0^t x(t)\,dt + Kd\,\frac{dx(t)}{dt} \qquad (4)$$

where x(t) is an input signal, y(t) is an output signal, Kp is a proportional controller coefficient for phase adjustment, Ki is an integrator coefficient for phase adjustment and Kd is a differentiator coefficient for phase adjustment.

The phase is adjusted by changing the proportional controller coefficient for phase adjustment Kp, the integrator coefficient for phase adjustment Ki and the differentiator coefficient for phase adjustment Kd. The optimum values of the proportional controller coefficient for phase adjustment Kp, the integrator coefficient for phase adjustment Ki and the differentiator coefficient for phase adjustment Kd are determined in advance by experiments or the like so as to assure maximum suppression of the vibration generated due to the natural vibration of the transmission mechanism 104.

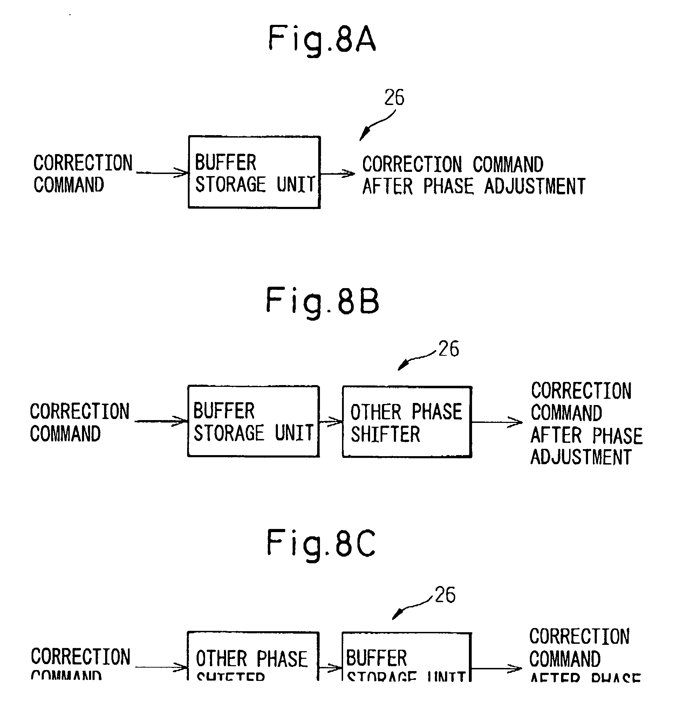

Figs. 8A to 8C are function block diagrams showing a second embodiment of the phase shifter 26. The phase shifter 26 according to this embodiment includes a buffer storage unit for sequentially storing the input correction command signals and outputting each of them after holding it for a predetermined time. The input operation command signal is output after being held for a predetermined time by the buffer storage unit, so that the timing of combining the correction command signal with the operation command signal is changed. As a result, the phase of the correction command signal with respect to the vibration of the driven object 106 is changed. The phase shifter 26 according to this embodiment, as shown in Fig. 8A, may be configured of only a buffer storage unit, or as shown in Fig. 8B or 8C, may be configured of a combination of a buffer storage unit and a phase shifter of other types such as a PID filter or a low-pass filter, described later, arranged before or after the buffer storage unit.

The phase is adjusted by changing the time during which the correction command signal is held in the buffer storage unit. A suitable signal holding time is determined in advance by experiments or the like so as to assure maximum suppression of the vibration generated due to the natural vibration of the transmission mechanism 104.

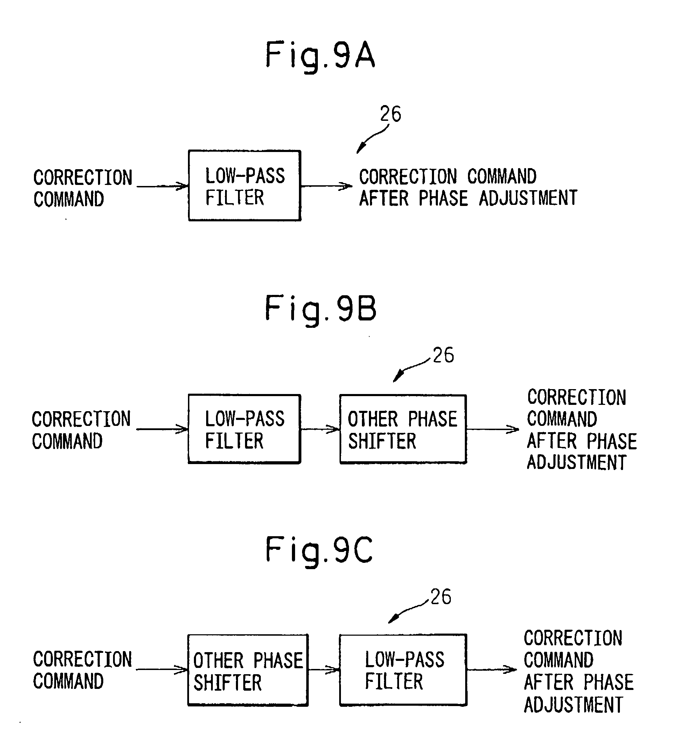

Figs. 9A to 9C are function block diagrams showing a third embodiment of the phase shifter 26. The phase shifter 26 according to this embodiment includes a low-pass filter functioning as a delay element for delaying the phase. The phase shifter 26 according to this embodiment, as shown in Fig. 9A, may be configured of only a low-pass filter, or as shown in Fig. 9B or 9C, may be configured of a combination of a low-pass filter and a phase shifter of other type such as a PID filter or a buffer storage unit arranged before or after the low-pass filter. The operation of the low-pass filter is represented, for example, by a following equation (5).

$$\tau\,\frac{dy(t)}{dt} + y(t) = x(t) \qquad (5)$$

where x(t) is an input signal, y(t) is an output signal and $\tau$ is a phase adjustment coefficient.

The phase is adjusted by changing the phase adjustment coefficient $\tau$ and the optimum value of the phase adjustment coefficient $\tau$ is determined in advance by experiments or the like so as to assure the maximum suppression of the vibration generated due to the natural vibration of the transmission mechanism 104.

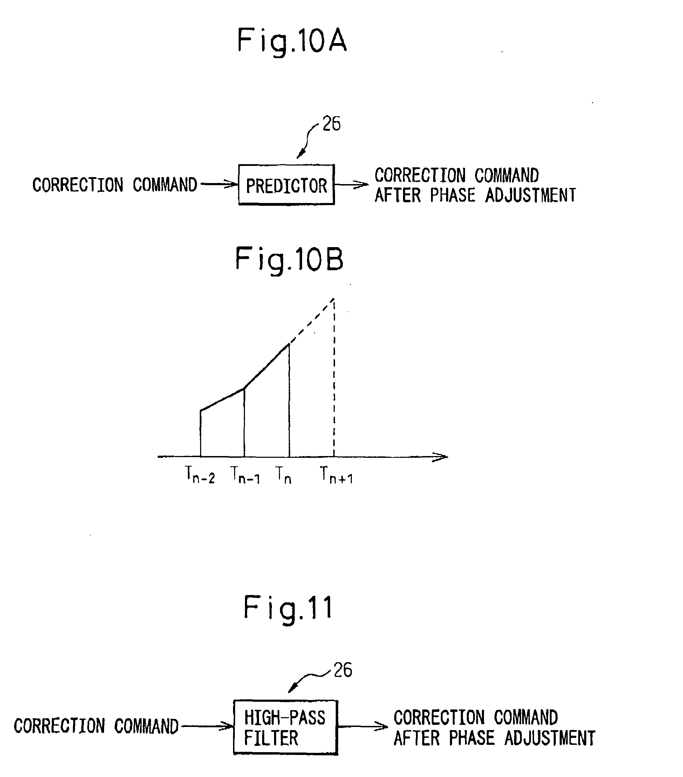

Fig. 10A is a function block diagram showing a fourth embodiment of the phase shifter 26. The phase shifter 26 according to this embodiment is configured of a predictor functioning to predict the value of the correction command after the lapse of a predetermined time from the current time based on the values of the past correction commands. Fig. 10B is a diagram for explaining an example of a prediction method used in the predictor. When the correction command at time point $T_n$ is represented by Rc(n), the predictor, in which the time $T_{n-1}$ (= $T_n$ - ta) as of a predetermined time ta before is stored in advance, calculates a change rate of the correction command Rc based on the correction command Rc(n-1) at time point $T_{n-1}$ and the correction command Rc(n) at the present time $T_n$ and then, assuming that the change rate of the correction command Rc from time point $T_n$ to time point $T_{n+1}$ (= $T_n$ + ta) is equal to the change rate of the correction command Rc from time point $T_{n-1}$ to time $T_n$, predicts the correction command Rc(n+1) at time point $T_{n+1}$, based on a following equation (6).

$$Rc(n+1) = Rc(n) + (Rc(n) - Rc(n-1)) \qquad (6)$$

The correction command Rc(n+1) predicted in this way is output as a correction command, with the result that the phase of the correction command with respect to the vibration of the driven object 106 generated due to the natural vibration of the transmission mechanism 104 can be advanced.

The phase is adjusted by changing the predetermined time ta, and an optimum value of the time ta is determined in advance by experiments or the like so as to assure the maximum suppression of the vibration generated due to the natural vibration of the transmission mechanism 104.

Fig. 11 is a function block diagram showing a fifth embodiment of the phase shifter 26. The phase shifter 26 according to this embodiment includes a high-pass filter functioning as a phase lead element for advancing the phase. The high-pass filter is represented, for example, by a following equation (7).

$$y(t) = \tau \frac{dx(t)}{dt} + x(t) \qquad (7)$$

where x(t) is an input signal, y(t) is an output signal and $\tau$ is a phase adjustment coefficient.

The phase is adjusted by changing the phase adjustment coefficient $\tau$, and an optimum value of the phase adjustment coefficient $\tau$ is determined in advance by experiments or the like so as to assure the maximum suppression of the vibration generated due to the natural vibration of the transmission mechanism 104.

The delay time required to transmit the motion of the motor 102 to the driven object 106 through the transmission mechanism 104 or the time required to determine the correction command from the acceleration of the driven object 106 is a value unique to a particular device, and keeps substantially constant during operation. Therefore, if the phase delay or phase advance of the phase shifter 26 having the aforementioned configuration is adjusted in advance by experiments or the like, the vibration caused by the motor 104 in accordance with the correction command signal component of the operation command signal is transmitted to the driven object 106 always in a state shifted 180 degrees from the phase of the vibration of the driven object 106 generated due to the natural vibration of the transmission mechanism 104. Thus, the vibration of the driven object 106 generated due to the natural vibration of the transmission mechanism 104 can be effectively reduced.

While the motor control device 10 according to the present invention has been described with reference to the embodiments shown in the accompanying drawings, the present invention is not limited to these embodiments. In the aforementioned embodiments, for example, the speed of the motor 102 is detected in place of the speed of the driven object 106, and the motor 102 is controlled by feedback based on the detected speed of the motor 102. However, the speed of the driven object 106 may be detected, and the motor 102 may be controlled based on the detected speed of the driven object 106. In this case, as understood by those skilled in the art, the speed command for the motor can be generated based on the desired speed of the driven object 106 and the detected speed of the driven object 106.

**Claims**

1. A motor control device (10) for detecting acceleration of a driven object (106) driven by a motor (102) through a transmission mechanism (104), determining a correction command based on the detected acceleration of the driven object (106), correcting an operation command for the motor (102) by the correction command thus determined, and then controlling the operation of the motor (102) based on the corrected operation command thereby to reduce the vibration generated in the driven object (106), said motor control device **characterized in that**:

the motor control device (10) comprises a phase shifter (26) for combining an operation command signal indicating the operation command with a correction command signal indicating the correction command after adjustably changing the phase of the correction command signal with respect to the vibration of the driven object (106) generated due to the natural vibration of the transmission mechanism (104).

2. The motor control device according to claim 1, wherein, in the phase shifter (26), the phase of the correction command signal is adjusted so as to offset the vibration of the driven object (106) generated due to the natural vibration of the transmission mechanism (104) by the vibration transmitted from the motor (102) to the driven object (106) through the transmission mechanism (104) based on the correction command signal.

3. The motor control device according to claim 2, wherein, in the phase shifter (26), the phase of the correction command signal is adjusted such that the phase shift is 180 degrees between the vibration of the driven object (106) generated due to the natural vibration of the transmission mechanism (104) and the vibration transmitted from the motor (102) to the driven object (106) through the transmission mechanism (104) based on the correction command signal.

4. The motor control device according to claim 1, wherein the phase shifter (26) changes the timing of adding the correction command signal to the operation command signal thereby to change the phase of the correction command signal with for the vibration of the driven object (106) due to the natural vibration of the transmission mechanism (104).

5. The motor control device according to claim 4, wherein the phase shifter (26) comprises a buffer storage unit capable of holding the correction command signal for a preset time.

6. The motor control device according to claim 1, wherein the phase shifter (26) changes the phase of an output signal with respect to an input signal thereby to change the phase of the correction command signal with respect to the vibration of the driven object (106) generated due to the natural vibration of the transmission mechanism (104).

7. The motor control device according to claim 6, wherein the phase shifter (26) comprises a PID filter.

8. The motor control device according to claim 6, wherein the phase shifter (26) comprises a low-pass filter.

9. The motor control device according to claim 6, wherein the phase shifter (26) comprises a high-pass filter.

10. The motor control device according to claim 1, wherein the phase shifter (26) is selected one of a buffer storage unit, a PID filter, a low-pass filter, a high-pass filter and any combination thereof.

11. The motor control device according to claim 1, wherein the phase shifter (26) comprises a predictor for predicting a correction command signal after the lapse of a predetermined time based on the past correction command signal.

# Fig.1

MOTOR CONTROL DEVICE

Fig.2

# Fig.3

SPEED ERROR → → ○ → PROPORTIONAL GAIN TERM (32) → ○ + → TORQUE COMMAND

INTEGRATION TERM (34) → INTEGRATION GAIN TERM (36) → +

18

# Fig.4

24

ACCELERATION FEEDBACK → ACCELERATION GAIN TERM (38) → CORRECTION COMMAND

11

# Fig.5A

VIBRATION DUE TO
NATURAL VIBRATION

VIBRATION DUE TO CORRECTION
COMMAND SIGNAL

BEFORE ADJUSTMENT

# Fig.5B

180°

AFTER ADJUSTMENT

# Fig.5C

EP 1 868 289 A1

# Fig.6

EP 1 868 289 A1

# Fig.7A

CORRECTION COMMAND → PID FILTER → CORRECTION COMMAND AFTER PHASE ADJUSTMENT

26

# Fig.7B

CORRECTION COMMAND → PID FILTER → OTHER PHASE SHIFTER → CORRECTION COMMAND AFTER PHASE ADJUSTMENT

26

# Fig.7C

CORRECTION COMMAND → OTHER PHASE SHIFTER → PID FILTER → CORRECTION COMMAND AFTER PHASE ADJUSTMENT

26

# Fig.8A

26

CORRECTION COMMAND → BUFFER STORAGE UNIT → CORRECTION COMMAND AFTER PHASE ADJUSTMENT

# Fig.8B

26

CORRECTION COMMAND → BUFFER STORAGE UNIT → OTHER PHASE SHIFTER → CORRECTION COMMAND AFTER PHASE ADJUSTMENT

# Fig.8C

26

CORRECTION COMMAND → OTHER PHASE SHIFTER → BUFFER STORAGE UNIT → CORRECTION COMMAND AFTER PHASE

# Fig.9A

26

CORRECTION
COMMAND → LOW-PASS
FILTER → CORRECTION COMMAND
AFTER PHASE ADJUSTMENT

# Fig.9B

26

CORRECTION
COMMAND → LOW-PASS
FILTER → OTHER PHASE
SHIFTER → CORRECTION
COMMAND
AFTER PHASE
ADJUSTMENT

# Fig.9C

26

CORRECTION
COMMAND → OTHER PHASE
SHIFTER → LOW-PASS
FILTER → CORRECTION
COMMAND
AFTER PHASE
ADJUSTMENT

## Fig.10A

CORRECTION COMMAND → [ PREDICTOR ] → CORRECTION COMMAND AFTER PHASE ADJUSTMENT

26

## Fig.10B

$T_{n-2}$  $T_{n-1}$  $T_n$  $T_{n+1}$

## Fig.11

CORRECTION COMMAND → [ HIGH-PASS FILTER ] → CORRECTION COMMAND AFTER PHASE ADJUSTMENT

26

**European Patent Office**

## EUROPEAN SEARCH REPORT

Application Number

EP 07 01 1567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/110451 A1 (SCHRODER EBERHARD [DE] ET AL SCHROEDER EBERHARD [DE] ET AL) 26 May 2005 (2005-05-26) * paragraphs [0036], [0038], [0045], [0055], [0057]; figures 1-3 * | 1-6 | INV. H02P23/00 G04D7/12 F16F15/02 |
| Y | * paragraphs [0051], [0055] - [0057] * ----- | 7-11 | |
| Y | US 5 828 014 A (GOTO MICHIO [JP] ET AL) 27 October 1998 (1998-10-27) * figures 7-19 * ----- | 1-11 | |
| Y | US 5 349 278 A (WEDEEN ROBERT S [US]) 20 September 1994 (1994-09-20) * figures 1-3 * ----- | 1-11 | |
| Y | GB 664 413 A (SMITH & SONS LTD S; FURZEHILL LAB LTD) 9 January 1952 (1952-01-09) * figures 1-3 * ----- | 1-11 | |
| | | | TECHNICAL FIELDS SEARCHED (IPC) H02P G04D F16F |

The present search report has been drawn up for all claims

| Place of search | Date of completion of the search | Examiner |
|---|---|---|
| Munich | 27 September 2007 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 868 289 A1

## ANNEX TO THE EUROPEAN SEARCH REPORT
## ON EUROPEAN PATENT APPLICATION NO.

EP 07 01 1567

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2007

| Patent document cited in search report | | Publication date | Patent family member(s) | | Publication date |
|---|---|---|---|---|---|
| US 2005110451 | A1 | 26-05-2005 | AT 339384 T | | 15-10-2006 |
| | | | DE 10314724 A1 | | 04-11-2004 |
| | | | EP 1464611 A2 | | 06-10-2004 |
| | | | ES 2273110 T3 | | 01-05-2007 |
| | | | JP 2004299908 A | | 28-10-2004 |
| US 5828014 | A | 27-10-1998 | CN 1172762 A | | 11-02-1998 |
| | | | GB 2313928 A | | 10-12-1997 |
| | | | HK 1003381 A1 | | 01-09-2000 |
| | | | ID 17498 A | | 08-01-1998 |
| | | | JP 10053378 A | | 24-02-1998 |
| | | | SG 72740 A1 | | 23-05-2000 |
| | | | TW 426631 B | | 21-03-2001 |
| US 5349278 | A | 20-09-1994 | NONE | | |
| GB 664413 | A | 09-01-1952 | NONE | | |

EPO FORM P0459

For more details about this annex : see Official Journal of the European Patent Office, No. 12/82

**EP 1 868 289 A1**

## REFERENCES CITED IN THE DESCRIPTION

**Patent documents cited in the description**

- JP 6091482 A